(19) Europäisches Patentamt
European Patent Office
Office européen des brevets

(11) **EP 3 598 829 A1**

(12) **EUROPEAN PATENT APPLICATION**
published in accordance with Art. 153(4) EPC

(43) Date of publication:
**22.01.2020 Bulletin 2020/04**

(21) Application number: **18767426.2**

(22) Date of filing: **14.03.2018**

(51) Int Cl.:
**H04W 72/12** (2009.01)

(86) International application number:
**PCT/KR2018/002999**

(87) International publication number:
**WO 2018/169310 (20.09.2018 Gazette 2018/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2017 US 201762471868 P**

(71) Applicant: **LG Electronics Inc.**
**Seoul 07336 (KR)**

(72) Inventors:
• **KIM, Seonwook**
**Seoul 06772 (KR)**
• **PARK, Changhwan**
**Seoul 06772 (KR)**
• **AHN, Joonkui**
**Seoul 06772 (KR)**
• **YANG, Suckchel**
**Seoul 06772 (KR)**

(74) Representative: **Plasseraud IP**
**66, rue de la Chaussée d'Antin**
**75440 Paris Cedex 09 (FR)**

(54) **METHOD FOR TRANSMITTING OR RECEIVING SIGNAL BY TERMINAL IN WIRELESS COMMUNICATION SYSTEM, AND APPARATUS SUPPORTING SAME**

(57) Disclosed are a method for transmitting or receiving a signal to or from a base station by a terminal in a wireless communication system, and an apparatus supporting the same. More particularly, the present invention provides a configuration for transmission or reception of a signal by a terminal when an uplink signal transmission time point is dynamically determined, differently from a conventional wireless communication system which determines, as an uplink signal transmission time point, a time point after a predetermined period of time from a time point of a signal for scheduling uplink signal transmission.

FIG. 13

**Description**

**TECHNICAL FIELD**

The following description relates to a wireless communication system and to a method of transmitting and receiving a signal by a User Equipment (UE) to and from a Base Station (BS) in the wireless communication system and an apparatus supporting the same.

More specifically, the following description includes a method of transmitting and receiving a signal by the UE when an uplink signal transmission timing is dynamically determined as opposed to a legacy wireless communication system in which a timing after a preconfigured duration from a timing of a signal for scheduling UL signal transmission is determined as the uplink signal transmission timing.

**BACKGROUND ART**

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

As described above, the introduction of the next generation RAT considering the enhanced mobile broadband communication, massive MTC, Ultra-reliable and low latency communication (URLLC), and the like has been discussed.

**DETAILED DESCRIPTION OF THE INVENTION**

**Technical Problems**

An object of the present disclosure is to provide a signal transmission and reception method of a UE in a newly proposed communication system and an apparatus therefor.

Particularly, the present invention is devised to provide a configuration for performing uplink signal transmission and reception suitable for a UE by comparing an uplink transmission timing, which is dynamically scheduled for the UE, capabilities of the UE, and a Timing Advance (TA) value configured for the UE.

It will be appreciated by persons skilled in the art that the objects that could be achieved with the present disclosure are not limited to what has been particularly described hereinabove and the above and other objects that the present disclosure could achieve will be more clearly understood from the following detailed description.

**Technical Solutions**

The present invention provides a method of transmitting and receiving a signal by a UE in a wireless communication system and an apparatus therefor.

According to an aspect of the present invention, provided herein is a method of transmitting and receiving a signal by a User Equipment (UE) to and from a Base Station (BS) in a wireless communication system, including receiving Downlink Control Information (DCI) for scheduling uplink signal transmission from the BS; and performing the scheduled uplink signal transmission based on a result of comparison between a first time duration between a reception timing of the DCI and a transmission timing of an uplink signal scheduled by the DCI and a second time duration determined based on a Timing Advance (TA) configured for the UE and a processing time of the UE for the DCI.

In another aspect of the present invention, provided herein is aA User Equipment (UE) for transmitting and receiving a signal to and from a Base Station (BS) in a wireless communication system, including a transmitter; a receiver; and a processor, wherein the processor is configured to receive Downlink Control Information (DCI) for scheduling uplink signal transmission from the BS; and perform the scheduled uplink signal transmission based on a result of comparison between a first time duration between a reception timing of the DCI and a transmission timing of an uplink signal scheduled by the DCI and a second time duration determined based on a Timing Advance (TA) configured for the UE and a processing time of the UE for the DCI.

When the length of the first time duration is larger than the length of the second time duration, the UE may perform the uplink signal transmission at the transmission timing of the uplink signal scheduled by the DCI.

When the length of the first time duration is smaller than the length of the second time duration, the UE may not perform the uplink signal transmission scheduled by the DCI.

The UE may transmit a reference signal in a time duration in which the uplink signal is scheduled to indicate that the uplink signal is not transmitted.

The reference signal may correspond to a Demodulation Reference Signal (DM-RS) or a Sounding Reference Signal (SRS).

When the length of the first time duration is smaller than the length of the second time duration, the UE may transmit only a first uplink signal out of the uplink signal scheduled by the DCI, the first uplink signal being scheduled after the second time duration from a timing at which the DCI is received.

A second uplink signal scheduled before the second time duration from the timing at which the DCI is received out of the uplink signal scheduled by the DCI may be punctured or rate-matched.

The UE may transmit, to the BS, information indicating that the length of the first time duration is smaller than the length of the second time duration, when the length of the first time duration is smaller than the length of the second time duration.

The length of the second time duration may correspond to one value among the TA configured for the UE, a sum of the TA configured for the UE and the processing time of the UE, and a maximum value of the TA configured for the UE and the processing time of the UE.

The described aspects of the present invention are merely part of the embodiments of the present invention. It will be appreciated by those skilled in the art that various modifications and alternatives could be developed from the following technical features of the present invention.

## Advantageous Effects

As is apparent from the above description, the embodiments of the present disclosure have the following effects.

According to the present invention, each UE may adaptively perform UL signal transmission at a timing of a UL signal configured by a BS according to capabilities of each UE or situations.

The effects that can be achieved through the embodiments of the present invention are not limited to what has been particularly described hereinabove and other effects which are not described herein can be derived by those skilled in the art from the following detailed description. That is, it should be noted that the effects which are not intended by the present invention can be derived by those skilled in the art from the embodiments of the present invention.

## Description of Drawings

The accompanying drawings, which are included to provide a further understanding of the invention, provide embodiments of the present invention together with detail explanation. Yet, a technical characteristic of the present invention is not limited to a specific drawing. Characteristics disclosed in each of the drawings are combined with each other to configure a new embodiment. Reference numerals in each drawing correspond to structural elements.

FIG. 1 is a diagram illustrating physical channels and a signal transmission method using the physical channels;
FIG. 2 is a diagram illustrating exemplary radio frame structures;
FIG. 3 is a diagram illustrating an exemplary resource grid for the duration of a downlink slot;
FIG. 4 is a diagram illustrating an exemplary structure of an uplink subframe;
FIG. 5 is a diagram illustrating an exemplary structure of a downlink subframe;
FIG. 6 is a diagram illustrating a self-contained subframe structure applicable to the present invention;
FIGs. 7 and 8 are diagrams illustrating representative methods for connecting TXRUs to antenna elements;
FIG. 9 is a schematic diagram illustrating a hybrid beamforming structure according to an embodiment of the present invention from the perspective of TXRUs and physical antennas;
FIG. 10 is a diagram schematically illustrating beam sweeping operation for synchronization signals and system information during a downlink (DL) transmission process according to an embodiment of the present invention;
FIG. 11 is a diagram schematically illustrating transmission and reception timings of a DL signal and a UL signal between an eNB (or gNB) and a UE;
FIG. 12 is a diagram schematically illustrating a transmission and reception configuration (or region) in which a DL signal and a UL signal are transmitted and received on the same component carrier;
FIG. 13 is a diagram illustrating a signal transmission and reception method between a UE and an base station, applicable to the present invention.

FIG. 14 is a diagram illustrating configurations of a UE and a BS capable of being implemented by the embodiments proposed in the present invention.

## BEST MODE FOR CARRYING OUT THE INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the attached drawings, a detailed description of known procedures or steps of the present disclosure will be avoided lest it should obscure the subject matter of the present disclosure. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), gNode B (gNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmission end is a fixed and/or mobile node that provides a data service or a voice service and a reception end is a fixed and/or mobile node that receives a data service or a voice service. Therefore, a UE may serve as a transmission end and a BS may serve as a reception end, on an UpLink (UL). Likewise, the UE may serve as a reception end and the BS may serve as a transmission end, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5G NR system, and a 3GPP2 system. In particular, the embodiments of the present disclosure may be supported by the standard specifications, 3GPP TS 36.211, 3GPP TS 36.212, 3GPP TS 36.213, 3GPP TS 36.321, 3GPP TS 36.331, TS 38.211, 3GPP TS 38.212, 3GPP TS 38.213, 3GPP TS 38.321 and 3GPP TS 38.331. That is, the steps or parts, which are not described to clearly reveal the technical idea of the present disclosure, in the embodiments of the present disclosure may be explained by the above standard specifications. All terms used in the embodiments of the present disclosure may be explained by the standard specifications.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

For example, the term, TxOP may be used interchangeably with transmission period or Reserved Resource Period (RRP) in the same sense. Further, a Listen-Before-Talk (LBT) procedure may be performed for the same purpose as a carrier sensing procedure for determining whether a channel state is idle or busy, Clear Channel Assessment (CCA), and Channel Acess Procedure (CAP).

Hereinafter, 3GPP LTE/LTE-A systems are explained, which are examples of wireless access systems.

The embodiments of the present disclosure can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present disclosure are described in the context of a 3GPP LTE/LTE-A system in order to clarify the technical features of the present disclosure, the present disclosure is also applicable to an IEEE 802.16e/m system, etc.

## 1. 3GPP LTE/LTE-A System

### 1.1. Physical Channels and Signal Transmission and Reception Method Using the Same

In a wireless access system, a UE receives information from an base station on a DL and transmits information to the base station on a UL. The information transmitted and received between the UE and the base station includes general data information and various types of control information. There are many physical channels according to the types/usages of information transmitted and received between the base station and the UE.

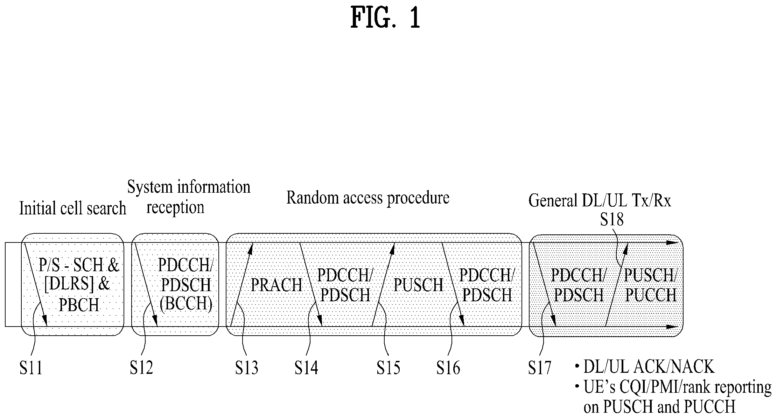

FIG. 1 illustrates physical channels and a general signal transmission method using the physical channels, which may be used in embodiments of the present disclosure.

When a UE is powered on or enters a new cell, the UE performs initial cell search (S11). The initial cell search involves acquisition of synchronization to an base station. Specifically, the UE synchronizes its timing to the base station and acquires information such as a cell Identifier (ID) by receiving a Primary Synchronization Channel (P-SCH) and a Secondary Synchronization Channel (S-SCH) from the base station.

Then the UE may acquire information broadcast in the cell by receiving a Physical Broadcast Channel (PBCH) from the base station.

During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the base station, the UE may perform a random access procedure with the base station (S13 to S16). In the random access procedure, the UE may transmit a preamble on a Physical Random Access Channel (PRACH) (S13) and may receive a PDCCH and a PDSCH associated with the PDCCH (S14). In the case of contention-based random access, the UE may additionally perform a contention resolution procedure including transmission of an additional PRACH (S15) and reception of a PDCCH signal and a PDSCH signal corresponding to the PDCCH signal (S16).

After the above procedure, the UE may receive a PDCCH and/or a PDSCH from the base station (S17) and transmit a Physical Uplink Shared Channel (PUSCH) and/or a Physical Uplink Control Channel (PUCCH) to the base station (S18), in a general UL/DL signal transmission procedure.

Control information that the UE transmits to the base station is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. Resource Structure

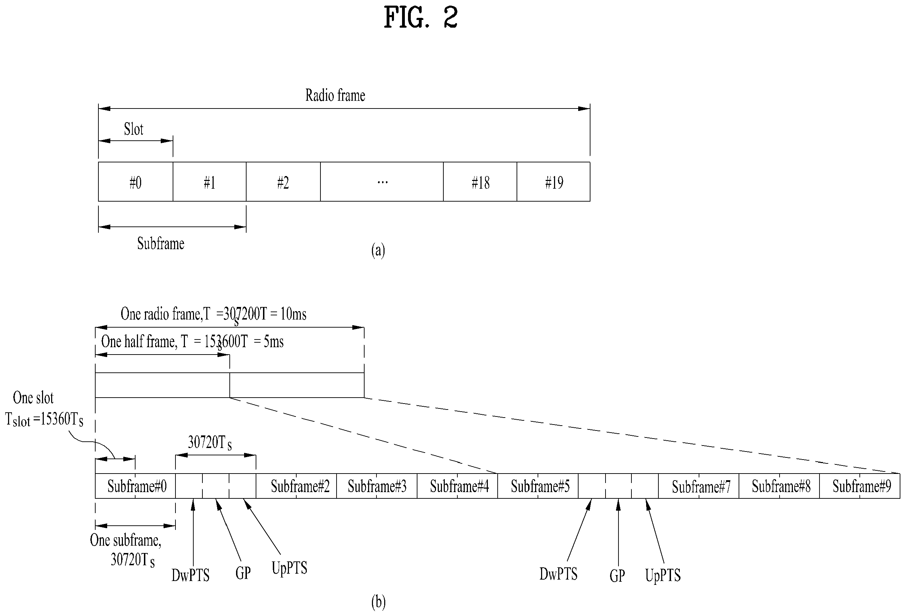

FIG. 2 illustrates exemplary radio frame structures used in embodiments of the present disclosure.

FIG. 2(a) illustrates frame structure type 1. Frame structure type 1 is applicable to both a full Frequency Division Duplex (FDD) system and a half FDD system.

One radio frame is 10ms (Tf=307200·Ts) long, including equal-sized 20 slots indexed from 0 to 19. Each slot is 0.5ms (Tslot=15360·Ts) long. One subframe includes two successive slots. An ith subframe includes 2ith and (2i+1)th slots. That is, a radio frame includes 10 subframes. A time required for transmitting one subframe is defined as a Transmission Time Interval (TTI). Ts is a sampling time given as Ts=1/(15kHzx2048)=3.2552x10-8 (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms (Tf=307200·Ts) long, including two half-frames each having a length of 5ms (=153600Ts) long. Each half-frame includes five subframes each being 1ms (=30720-Ts) long. An ith subframe includes 2ith and (2i+l)th slots each having a length of 0.5ms (Tslot=15360·Ts). Ts is a sampling time given as Ts=1/(15kHzx2048)=3.2552x10-8 (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an base station. The GP is used to cancel UL interference between a UL and a DL, caused by the multi-path delay of a DL signal.

[Table 1] below lists special subframe configurations (DwPTS/GP/UpPTS lengths).

[Table 1]

| Special subframe configuration | Normal cyclic prefix in downlink | | | Extend cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | $4384 \cdot T_s$ | $5120 \cdot T_s$ |
| 5 | $6592 \cdot T_s$ | $4384 \cdot T_s$ | $5120 \cdot T_s$ | $20480 \cdot T_s$ | | |
| 6 | $19760 \cdot T_s$ | | | $2.3040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |

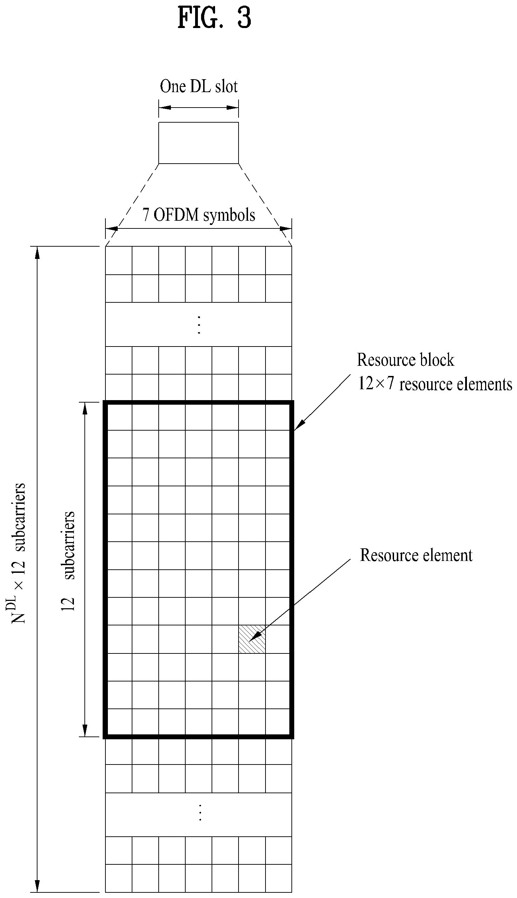

FIG. 3 illustrates an exemplary structure of a DL resource grid for the duration of one DL slot, which may be used in embodiments of the present disclosure.

Referring to FIG. 3, a DL slot includes a plurality of OFDM symbols in the time domain. One DL slot includes 7 OFDM symbols in the time domain and an RB includes 12 subcarriers in the frequency domain, to which the present disclosure is not limited.

Each element of the resource grid is referred to as a Resource Element (RE). An RB includes 12x7 REs. The number of RBs in a DL slot, NDL depends on a DL transmission bandwidth. A UL slot may have the same structure as a DL slot.

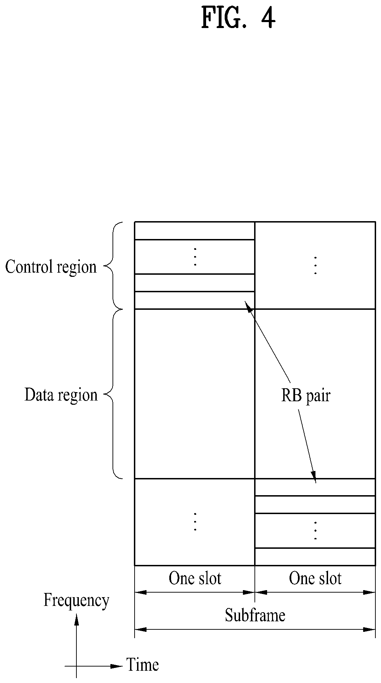

FIG. 4 illustrates a structure of a UL subframe which may be used in embodiments of the present disclosure.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a UE does not transmit a PUCCH and a PUSCH simultaneously. A pair of RBs in a subframe are allocated to a PUCCH for a UE. The RBs of the RB pair occupy different subcarriers in two slots. Thus it is said that the RB pair frequency-hops over a slot boundary.

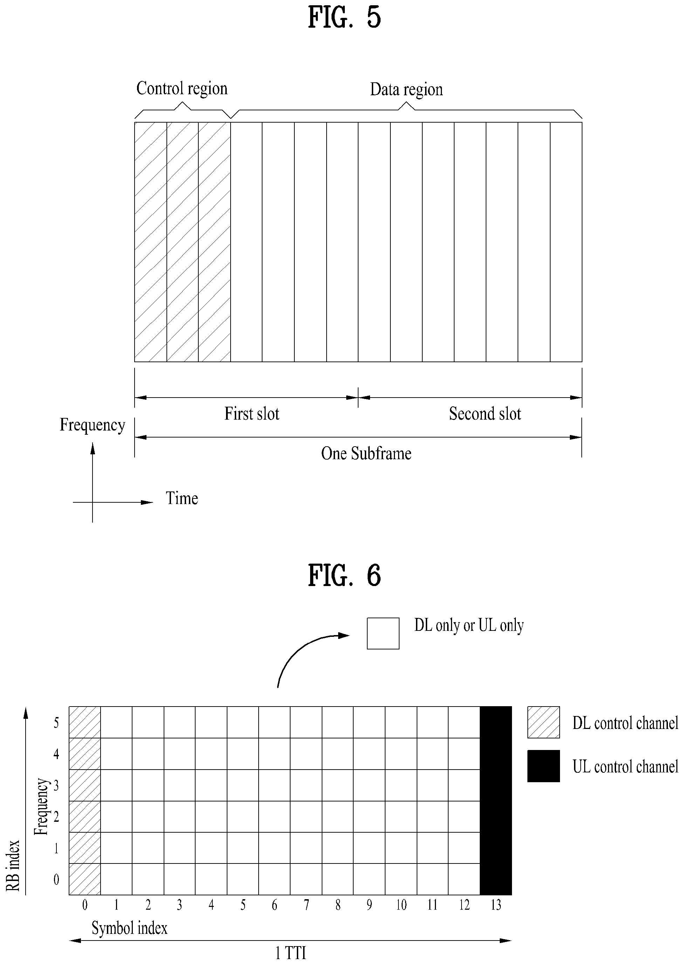

FIG. 5 illustrates a structure of a DL subframe that may be used in embodiments of the present disclosure.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e. the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

### 1.3. CSI Feedback

In the 3GPP LTE or LTE-A system, a user equipment (UE) is defined to report channel state information (CSI) to a base station (BS) (or eNB). Herein, the CSI collectively refers to information indicating the quality of a radio channel (link) established between a UE and an antenna port.

For example, the CSI may include a rank indicator (RI), a precoding matrix indicator (PMI), and a channel quality indicator (CQI).

Herein, the RI, which indicates rank information about a channel, represents the number of streams that a UE receives through the same time-frequency resources. The RI value is determined depending on long-term fading of the channel and is thus usually fed back to the BS by the UE with a longer period than that for the PMI and CQI.

The PMI, which is a value reflecting the channel space characteristics, indicates a precoding index preferred by the UE based on a metric such as the SINR.

The CQI, which is a value indicating the intensity of a channel, typically indicates a reception SINR which may be obtained by the BS when the PMI is used.

In the 3GPP LTE or LTE-A system, the BS configures a plurality of CSI processes for the UE and receive CSI for each process from the UE. In this case, the CSI process is configured with a CSI-RS for measuring the quality of the signal from the BS and CSI interference measurement (CSI-IM) resources.

### 1.4. RRM measurement

The LTE system supports radio resource management (RRM) operation including power control, scheduling, cell search, cell reselection, handover, radio link or connection monitoring, and connection establishment and re-establishment. In this case, the serving cell may request the UE to send RRM measurement information corresponding to the measurement value for performing the RRM operation. As representative examples, in the LTE system, the UE may measure cell search information, reference signal received power (RSRP), reference signal received quality (RSRQ), and the like for each cell and then transmit the measured information. Specifically, in the LTE system, the UE receives 'measConfig' for the RRM measurement from the serving cell through a higher layer signal and then measure RSRP or RSRQ according to information in 'measConfig'.

In the LTE system, the RSRP, RSRQ, and RSSI has been defined as follows.

The RSRP is defined as the linear average over the power contributions (in [W]) of the resource elements that carry cell-specific reference signals within the considered measurement frequency bandwidth. For example, for RSRP determination, the cell-specific reference signals $R_0$ shall be used. For RSRP determination, the cell-specific reference signals $R_0$ shall be used. If the UE can reliably detect that $R_1$ is available, it may use $R_1$ in addition to $R_0$ to determine RSRP.

The reference point for the RSRP shall be the antenna connector of the UE.

If receiver diversity is in use by the UE, the reported value shall not be lower than the corresponding RSRP of any of the individual diversity branches.

The RSRQ is defined as the ratio $N \times RSRP/(E\text{-}UTRA\ carrier\ RSSI)$, where N is the number of RBs of the E-UTRA carrier RSSI measurement bandwidth. The measurements in the numerator and denominator shall be made over the same set of resource blocks.

The E-UTRA carrier RSSI comprises the linear average of the total received power (in [W]) observed only in OFDM symbols containing reference symbols for antenna port 0, in the measurement bandwidth, over N number of resource blocks by the UE from all sources, including co-channel serving and non-serving cells, adjacent channel interference, thermal noise etc. If higher-layer signaling indicates certain subframes for performing RSRQ measurements, then RSSI is measured over all OFDM symbols in the indicated subframes.

The reference point for the RSRQ shall be the antenna connector of the UE.

If receiver diversity is in use by the UE, the reported value shall not be lower than the corresponding RSRQ of any of the individual diversity branches.

The RSSI is defined as the received wide band power, including thermal noise and noise generated in the receiver, within the bandwidth defined by the receiver pulse shaping filter.

The reference point for the measurement shall be the antenna connector of the UE.

If receiver diversity is in use by the UE, the reported value shall not be lower than the corresponding UTRA carrier RSSI of any of the individual receive antenna branches.

Based on the above-described definitions, in the case of intra-frequency measurement, the UE operating in the LTE system may measure the RSRP in the bandwidth indicated by the allowed measurement bandwidth related information element (IE) transmitted in system information block type 3 (SIB3). Meanwhile, in the case of inter-frequency measurement, the UE may measure the RSRP in the bandwidth corresponding to one of 6, 15, 25, 50, 75, 100 resource blocks (RBs) indicated by the allowed measurement bandwidth related IE transmitted in SIB5. Alternatively, when there is no IE, the UE may measure the RSRP in the entire downlink system frequency band as the default operation.

Upon receiving information on the allowed measurement bandwidth, the UE may consider the corresponding value as the maximum measurement bandwidth and then freely measure the RSRP value in the corresponding value. However, if the service cell transmits an IE defined as WB-RSRQ to the UE and set the allowed measurement bandwidth equal to or higher than 50 RBs, the UE should calculate the RSRP value for the entire allowed measurement bandwidth. Meanwhile, when intending to the RSSI, the UE measures the RSSI using a frequency band of the UE's receiver according to the definition of RSSI bandwidth.

## 2. New Radio Access Technology System

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has also been required. Moreover, a communication system design capable of supporting services/UEs sensitive to reliability and latency has been proposed.

As the new RAT considering the enhanced mobile broadband communication, massive MTC, Ultra-reliable and low latency communication (URLLC), and the like, a new RAT system has been proposed. In the present invention, the corresponding technology is referred to as the new RAT or new radio (NR) for convenience of description.

### 2.1. Numerologies

The NR system to which the present invention is applicable supports various OFDM numerologies shown in the following table. In this case, the value of $\mu$ and cyclic prefix information per carrier bandwidth part can be signaled in DL and UL, respectively. For example, the value of $\mu$ and cyclic prefix information per downlink carrier bandwidth part may be signaled though DL-BWP-mu and DL-MWP-cp corresponding to higher layer signaling. As another example, the value of $\mu$ and cyclic prefix information per uplink carrier bandwidth part may be signaled though UL-BWP-mu and UL-MWP-cp corresponding to higher layer signaling.

[Table 2]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

**2.2 Frame Structure**

DL and UL transmission are configured with frames with a length of 10 ms. Each frame may be composed of ten subframes, each having a length of 1 ms. In this case, the number of consecutive OFDM symbols in each subframe is

$$N_{\text{symb}}^{\text{subframe}\mu} = N_{\text{symb}}^{\text{slot}} N_{\text{slot}}^{\text{subframe}\mu}.$$

In addition, each subframe may be composed of two half-frames with the same size. In this case, the two half-frames are composed of subframes 0 to 4 and subframes 5 to 9, respectively.

Regarding the subcarrier spacing $\mu$, slots may be numbered within one subframe in ascending order like

$$n_s^{\mu} \in \left\{ 0, \ldots, N_{\text{slot}}^{\text{subframe},\mu} - 1 \right\}$$

and may also be numbered within a frame in ascending order like

$$n_{s,f}^{\mu} \in \left\{ 0, \ldots, N_{\text{slot}}^{\text{frame},\mu} - 1 \right\}.$$

In this case, the number of consecutive OFDM symbols in one slot ($N_{\text{symb}}^{\text{slot}}$) may be determined as shown in the following table according to the cyclic prefix. The start slot ($n_s^{\mu}$) of one subframe is aligned with the start OFDM symbol ($n_s^{\mu} N_{\text{symb}}^{\text{slot}}$) of the same subframe in the time dimension. Table 3 shows the number of OFDM symbols in each slot/frame/subframe in the case of the normal cyclic prefix, and Table 4 shows the number of OFDM symbols in each slot/frame/subframe in the case of the extended cyclic prefix.

[Table 3]

| $\mu$ | $N_{\text{symb}}^{\text{slot}}$ | $N_{\text{slot}}^{\text{frame}\mu}$ | $N_{\text{slot}}^{\text{subframe}\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 4]

| $\mu$ | $N_{\text{symb}}^{\text{slot}}$ | $N_{\text{slot}}^{\text{frame}\mu}$ | $N_{\text{slot}}^{\text{subframe}\mu}$ |
|---|---|---|---|
| 2 | 12 | 40 | 4 |

In the NR system to which the present invention can be applied, a self-contained slot structure can be applied based on the above-described slot structure.

FIG. 6 is a diagram illustrating a self-contained slot structure applicable to the present invention.

In FIG. 6, the hatched area (e.g., symbol index = 0) indicates a downlink control region, and the black area (e.g., symbol index = 13) indicates an uplink control region. The remaining area (e.g., symbol index = 1 to 13) can be used for DL or UL data transmission.

Based on this structure, the base station and UE can sequentially perform DL transmission and UL transmission in one slot. That is, the base station and UE can transmit and receive not only DL data but also UL ACK/NACK in response to the DL data in one slot. Consequently, due to such a structure, it is possible to reduce a time required until data retransmission in case a data transmission error occurs, thereby minimizing the latency of the final data transmission.

In this self-contained slot structure, a predetermined length of a time gap is required for the process of allowing the base station and UE to switch from transmission mode to reception mode and vice versa. To this end, in the self-contained slot structure, some OFDM symbols at the time of switching from DL to UL are set as a guard period (GP).

Although it is described that the self-contained slot structure includes both the DL and UL control regions, these control regions can be selectively included in the self-contained slot structure. In other words, the self-contained slot structure according to the present invention may include either the DL control region or the UL control region as well as both the DL and UL control regions as shown in FIG. 6.

In addition, for example, the slot may have various slot formats. In this case, OFDM symbols in each slot can be divided into downlink symbols (denoted by 'D'), flexible symbols (denoted by 'X'), and uplink symbols (denoted by 'U').

Thus, the UE can assume that DL transmission occurs only in symbols denoted by 'D' and 'X' in the DL slot. Similarly, the UE can assume that UL transmission occurs only in symbols denoted by 'U' and 'X' in the UL slot.

### 2.3. Analog Beamforming

In a millimeter wave (mmW) system, since a wavelength is short, a plurality of antenna elements can be installed in the same area. That is, considering that the wavelength at 30 GHz band is 1 cm, a total of 100 antenna elements can be installed in a 5 5 cm panel at intervals of 0.5 lambda (wavelength) in the case of a 2-dimensional array. Therefore, in the mmW system, it is possible to improve the coverage or throughput by increasing the beamforming (BF) gain using multiple antenna elements.

In this case, each antenna element can include a transceiver unit (TXRU) to enable adjustment of transmit power and phase per antenna element. By doing so, each antenna element can perform independent beamforming per frequency resource.

However, installing TXRUs in all of the about 100 antenna elements is less feasible in terms of cost. Therefore, a method of mapping a plurality of antenna elements to one TXRU and adjusting the direction of a beam using an analog phase shifter has been considered. However, this method is disadvantageous in that frequency selective beamforming is impossible because only one beam direction is generated over the full band.

To solve this problem, as an intermediate form of digital BF and analog BF, hybrid BF with B TXRUs that are fewer than Q antenna elements can be considered. In the case of the hybrid BF, the number of beam directions that can be transmitted at the same time is limited to B or less, which depends on how B TXRUs and Q antenna elements are connected.

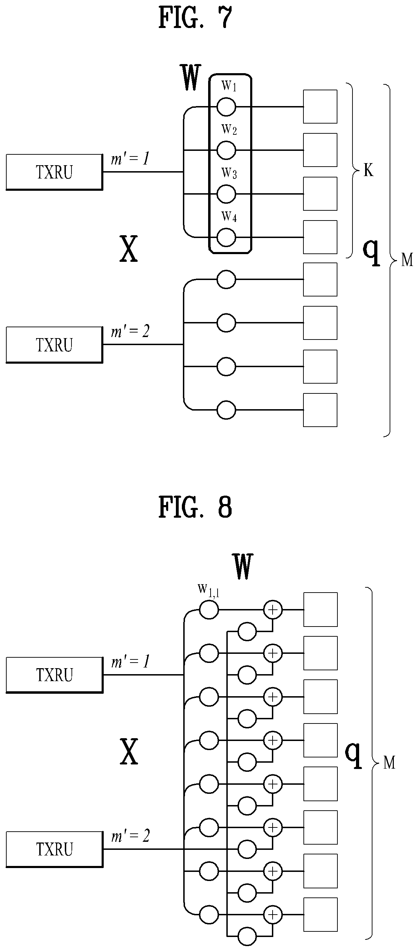

FIGs. 7 and 8 are diagrams illustrating representative methods for connecting TXRUs to antenna elements. Here, the TXRU virtualization model represents the relationship between TXRU output signals and antenna element output signals.

FIG. 7 shows a method for connecting TXRUs to sub-arrays. In FIG. 7, one antenna element is connected to one TXRU.

Meanwhile, FIG. 8 shows a method for connecting all TXRUs to all antenna elements. In FIG. 8, all antenna element are connected to all TXRUs. In this case, separate addition units are required to connect all antenna elements to all TXRUs as shown in FIG. 8.

In FIGs. 7 and 8, W indicates a phase vector weighted by an analog phase shifter. That is, W is a major parameter determining the direction of the analog beamforming. In this case, the mapping relationship between CSI-RS antenna ports and TXRUs may be 1:1 or 1-to-many.

The configuration shown in FIG. 7 has a disadvantage in that it is difficult to achieve beamforming focusing but has an advantage in that all antennas can be configured at low cost.

On the contrary, the configuration shown in FIG. 8 is advantageous in that beamforming focusing can be easily achieved. However, since all antenna elements are connected to the TXRU, it has a disadvantage of high cost.

When a plurality of antennas are used in the NR system to which the present invention is applicable, the hybrid beamforming method obtained by combining the digital beamforming and analog beamforming can be applied. In this case, the analog (or radio frequency (RF)) beamforming means the operation where precoding (or combining) is performed at the RF end. In the case of the hybrid beamforming, precoding (or combining) is performed at the baseband end and RF end, respectively. Thus, the hybrid beamforming is advantageous in that it guarantees the performance similar to the digital beamforming while reducing the number of RF chains and D/A (digital-to-analog) (or A/D (analog-to-digital) z converters.

For convenience of description, the hybrid beamforming structure can be represented by N transceiver units (TXRUs) and M physical antennas. In this case, the digital beamforming for L data layers to be transmitted by the transmitting end may be represented by the N * L (N by L) matrix. Thereafter, N converted digital signals are converted into analog signals by the TXRUs, and then the analog beamforming, which may be represented by the M N (M by N) matrix, is applied to the converted signals.

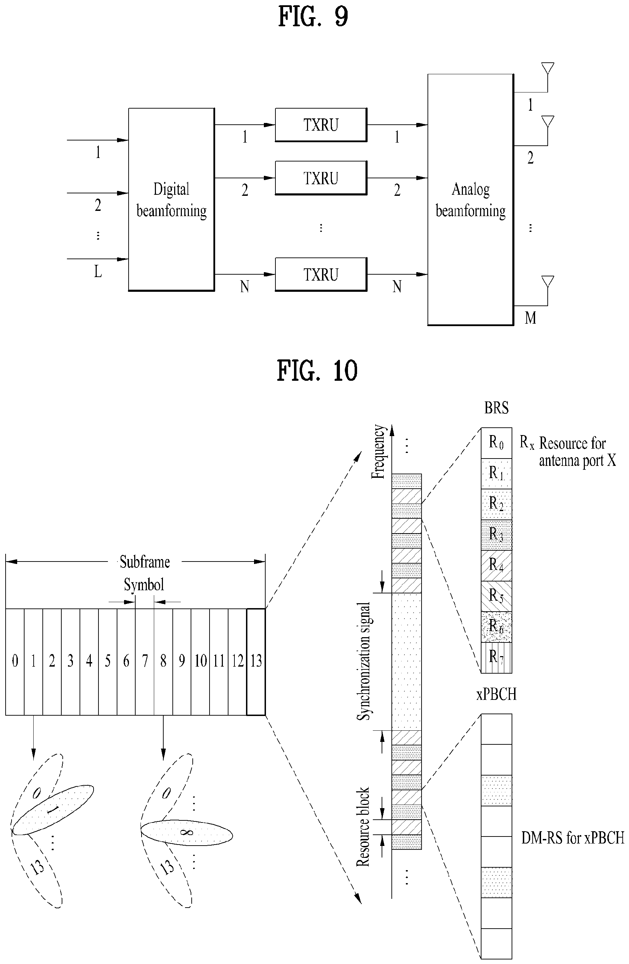

FIG. 9 is a schematic diagram illustrating a hybrid beamforming structure according to an embodiment of the present invention from the perspective of TXRUs and physical antennas. In FIG. 9, it is assumed that the number of digital beams is L and the number of analog beams is N.

Additionally, a method for providing efficient beamforming to UEs located in a specific area by designing an base station capable of changing analog beamforming on a symbol basis has been considered in the NR system to which the present invention is applicable. Further, a method of introducing a plurality of antenna panels where independent hybrid beamforming can be applied by defining N TXRUs and M RF antennas as one antenna panel has also been considered in the NR system to which the present invention is applicable.

When the base station uses a plurality of analog beams as described above, each UE has a different analog beam suitable for signal reception. Thus, the beam sweeping operation where the base station applies a different analog beam per symbol in a specific subframe (SF) (at least with respect to synchronization signals, system information, paging, etc.) and then perform signal transmission in order to allow all UEs to have reception opportunities has been considered in the NR system to which the present invention is applicable.

FIG. 10 is a diagram schematically illustrating the beam sweeping operation for synchronization signals and system information during a downlink (DL) transmission process according to an embodiment of the present invention

In FIG. 10, a physical resource (or channel) for transmitting system information of the NR system to which the present invention is applicable in a broadcasting manner is referred to as a physical broadcast channel (xPBCH). In this case, analog beams belonging to different antenna panels can be simultaneously transmitted in one symbol.

In addition, as shown in FIG. 10, the introduction of a beam reference signal (BRS) corresponding to the reference signal (RS) to which a single analog beam (corresponding to a specific antenna panel) is applied has been discussed as the configuration for measuring a channel per analog beam in the NR system to which the present invention is applicable. The BRS can be defined for a plurality of antenna ports, and each BRS antenna port may correspond to a single analog beam. In this case, unlike the BRS, all analog beams in the analog beam group can be applied to the synchronization signal or xPBCH unlike the BRS to assist a random UE to correctly receive the synchronization signal or xPBCH.

### 3. Proposed embodiment

In a wireless communication system, such as an LTE or NR system, to which the present invention is applicable, the base station sets a timing advance (TA) value in order to match reception timings of UL signals transmitted by a plurality of UEs, thereby controlling transmission timings of the UEs.

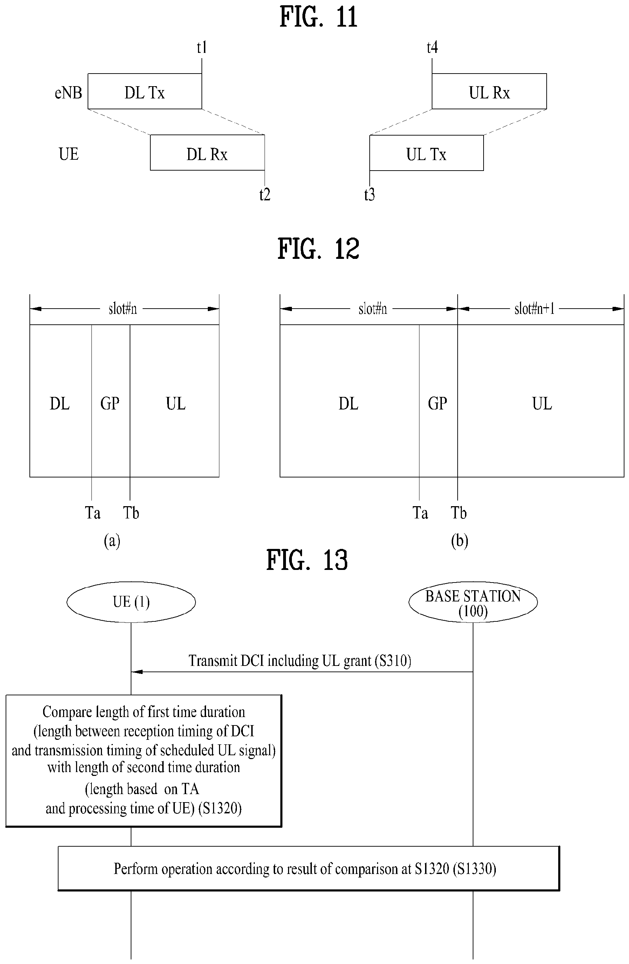

FIG. 11 is a diagram schematically illustrating transmission and reception timings of a DL signal and a UL signal between a base station (e.g., eNB or gNB) and a UE.

As illustrated in FIG. 11, the UE may receive, at a timing of t2, a DL signal transmitted at a timing of t1 by the eNB (or gNB), due to propagation delay (= t2-t1). The eNB (or gNB) may receive, at a timing of t4, a UL signal transmitted at a timing t3 by the UE, due to propagation delay (= t4-t3).

To receive UL signals from a plurality of UEs at the timing of t4, the eNB (or gNB) may signal different TA values according to propagation delay values of the respective UEs to the respective UEs. Specifically, the eNB (or gNB) may signal a TA value which doubles a propagation delay of each UE to each UE. Upon receiving signaling corresponding to each UE, the UE may start to transmit a UL signal at a timing of t2+(t4-t1)-TA after receiving a DL signal until the timing of t2.

FIG. 12 is a diagram schematically illustrating a transmission and reception configuration (or region) in which a DL signal and a UL signal are transmitted and received on the same component carrier.

As illustrated in FIG. 12, in the wireless communication system, such as the LTE or NR system, to which the present invention is applicable, the DL signal and the UL signal may be transmitted and received on the same component carrier. Additionally, the configuration proposed in the present invention may be extended to paired spectrum such as cross-carrier scheduling or to Frequency Division Duplex (FDD). The above configuration may also be extended to the case of scheduling between Bandwidth Parts (BWPs) having the same or different numerologies.

Specifically, a DL signal region and a UL signal region may be present in one slot and a Guard Period (GP) for switching from DL to UL between the two regions (hereinafter, referred to as 'DL-to-UE switching', for convenience) may be configured, as illustrated in FIG. 12(a). Alternatively, the DL signal region and the UL signal region may be present in slot#n and slot#n+1, respectively, and the GP may be configured between the two regions, as illustrated in FIG. 12(b). In this case, although the GP is illustrated as being present in slot#n in FIG. 12(b), the GP may be located in slot#n+1 rather than slot#n or may be located over slot#n and slot#n+1.

In the present invention, a slot may correspond to a slot of the NR system or a subframe of the LTE system.

In FIG. 12(a), transmission of a UL signal (e.g., a UL control signal, UL data, and/or a UL RS) may be scheduled after the GP with respect to the UE that has received the DL signal (e.g., a DL control signal and/or DL data) during X symbols (where X is a natural number) in one slot. In this case, if a TA value (or the sum of the TA value and the DL-to-UL switching time) configured for the UE is larger than a GP value (= Tb-Ta), a transmission starting timing of the UL signal after the TA (or the sum of the TA and the DL-to-UL switching time) is applied since the DL signal has been received exceeds a starting time of the already scheduled UL signal so that the UE cannot attempt to perform UL transmission.

Alternatively, the TA (or the sum of the TA and the DL-to-UL switching time) may be smaller than the GP and the UL signal may be scheduled from the DL control signal immediately before the GP. In this case, a timing at which the UL may start to transmit the UL signal may be determined in consideration of not only the afore-described TA value but also a UE processing time budget including decoding of the DL control signal of the UE and a transmission preparation time of the UL signal. Therefore, if the GP is larger than TA + UE processing time (including the DL-to-UL switching time), the UE fails to perform transmission of the UL signal at a scheduled time.

In the present invention, the GP may be a duration configured in a frame structure in terms of a network or a duration generalized as a gap between the DL control signal and the UL signal after the DL control signal in terms of the UE (regardless of the frame structure in terms of the network). In other words, the 'GP' mentioned in the present invention may imply a region between a specific DL region and a specific UL region. The region may be simply configured by one guard period or may be configured by a region including one or more DL regions and/or UL regions.

Additionally, if a TA value configured by the UE is larger than a maximum TA configured for reception of a specific UL signal on a specific carrier, the UE may not perform scheduled transmission of the UL signal at a scheduled time similarly to the above-described example. Such a problem may occur due to a TA value mismatch between the eNB (or gNB) and the UE when the UE fails to successfully receive a TA command transmitted by eNB (or gNB).

In this situation, if the UE drops UL signal transmission, the eNB (or gNB) may not be aware of whether the reason (why the UE dis not transmitted the UL signal) is that the UE failed to receive a UL grant (UL grant missing) or that TA values are mismatched. When taking into account an unlicensed band operation for determining whether to perform access based on a busy/idle state of a channel, the eNB (or gNB) may not be aware of whether the reason (why the UE has not transmitted the UL signal through an unlicensed band) is that the UE has not attempted to transmit the UL signal because the channel is in a busy state during the GP, that the UE has failed receive the UL grant, or that TA values are mismatched.

Therefore, in the present invention, a DL signal reception method and/or a UL signal transmission method of the UE and an applicable priority rule between DL and UL, in the above TA mismatch situation, will be described in more detail.

As described above, the GP described below may imply a time gap between a DL region in which a UL grant is received and a UL region scheduled by the UL grant and the 'DL-to-UL switching time' may imply a minimum time needed when a specific UE receives the UL grant and transmits the UL signal scheduled by the UL grant. In other words, in the following description, 'DL-to-UL switching time' may have the same meaning as 'UE processing time'.

In the following description, the 'TA mismatch' means the case in which a minimum time length necessary for the UE, based on a TA value indicated by the eNB (or gNB), is shorter than a length between a reception timing of the UL grant and a UL signal transmission timing scheduled by the UL grant. In addition, the 'TA mismatch' may mean the case in which a time necessary for scheduled UL signal transmission by the UE (e.g., a TA of the UE, the sum of the TA and a UE processing time (e.g., DL-to-UL switching), or a maximum value of the TA and the UE processing time) is smaller than a length between a reception timing of the UL grant and a UL signal transmission timing scheduled by the UL grant.

**3.1. DL reception and/or UL transmission method in TA mismatch situation**

The present invention assumes that the UE cannot transmit a scheduled UL signal during a minimum of Y symbols due to TA mismatch between the eNB (or gNB) and the UE. As an example, in FIG. 12(a), it is assumed that, when the UE is scheduled to receive the DL signal until the timing of Ta and to transmit the UL signal starting from the timing of Tb by applying the TA (e.g., the sum of the TA and a DL-to-UL switching time or a maximum value of the TA and the DL-to-UL switching time), a difference between the TA (e.g., the sum of the TA and a DL-to-UL switching time or a maximum value of the TA and the DL-to-UL switching time) and the GP (=Tb-Ta) is larger than a Y-symbol interval and smaller than a (Y+1)-symbol interval.

3.1.1. First UE operation method

When the UE cannot transmit the scheduled UL signal during a minimum of Y symbols due to a TA mismatch issue between the eNB (or gNB) and the UE, the UE may drop total transmission of the scheduled UL signal.

### 3.1.2. Second UE operation method

When the UE cannot transmit the scheduled UL signal during a minimum of Y symbols due to a TA mismatch issue between the eNB (or gNB) and the UE, the UE may be configured to transmit the UL signal during the remaining symbols except for the Y symbols among symbols corresponding to the scheduled UL signal. In this case, the UE may puncture (or rate-match) the Y symbols for transmission of the UL signal in the remaining symbols.

### 3.1.3. Third UE operation method

When the UE cannot transmit the scheduled UL signal during a minimum of Y symbols due to a TA mismatch issue between the eNB (or gNB) and the UE, the UE may be configured to receive the DL signal only in the remaining symbols except for the last Y symbols among symbols corresponding to the DL signal.

### 3.1.4. Fourth UE operation method

When the UE cannot transmit the scheduled UL signal during a minimum of Y symbols due to a TA mismatch issue between the eNB (or gNB) and the UE, the UE may be configured to receive the DL signal only in the remaining symbols except for the last Z symbols (where Z<Y) among symbols corresponding to the DL signal and to transmit the UL signal in symbols except for (Y-Z) symbols among symbols corresponding to the scheduled UL signal. In this case, the UE may puncture (or rate-match) the Y symbols for transmission of the UL signal in the remaining symbols.

Particularly, when the UE attempts to transmit the UL signal according to the above-described second to fourth UE operations, a transmission timing of the UL signal may be determined by applying a TA value of the UE at a current timing, by applying a TA value corresponding to a GP interval (or a maximum TA), by applying a maximum TA value smaller than a GP (or a maximum TA) which has been set in the past, by applying the latest TA value smaller than a GP (a maximum TA) among TA values which have been set in the past, or by applying a TA value which is predetermined or configured by higher layer signaling (e.g., RRC signaling) or first layer signaling (L1 signaling (e.g., DCI)).

## 3.2. Priority rule

As a UE operation method which is applicable in a TA mismatch situation, different methods may be applied to the various methods proposed in Section 3.1 according to an important degree of the DL signal and the UL signal. For this purpose, at least the following cases may be considered:

- whether a DL control region is included (or whether the DL control signal has been transmitted) during the last Y or Z symbols of the DL signal,
- whether an RS (e.g., a Demodulation Reference Signal (DM-RS), a Channel State Information Reference Signal (CSI-RS), etc.) and/or a Synchronization Signal (SS) (e.g., a Primary Synchronization Signal (PSS), a Secondary Synchronization Signal (SSS), etc.) is included during the last Y or Z symbols of the DL signal,
- the ratio of a DL data part during the last Y or Z symbols of the DL signal to all DL data,
- whether a UL control region is included (or whether the UL control signal is transmitted) or Uplink Control Information (UCI) (e.g., HARQ-ACK, Channel State Information (CSI), a Rank Indicator (RI), beam related information, etc.) is included, or which UCI information is conveyed, during the first Y or (Y-Z) symbols of the UL signal,
- whether an RS (e.g., a DM-RS, a Sounding Reference Signal (SRS), etc.) is included during the first Y or (Y-Z) symbols of the UL signal, and
- the ratio of a UL data part during the first Y or (Y-Z) symbols of the UL signal to all DL data.

Hereinafter, a priority rule which is applicable to the UE operation will be described in detail in consideration of at least one of the above various cases.

### 3.2.1. First priority rule

A control channel (or a DL/UL data channel including DCI/UCI) may be prioritized over a data channel. In other words, in the above-described various UE operation methods, the UE may preferentially perform transmission and reception of the control channel over transmission and reception of the data channel.

As an example, when the last Y symbols of the DL signal are configured by the DL control channel and the first Y symbols of the UL signal are configured by the UL data channel, the UE may drop total transmission of the UL signal or may drop only transmission of the first Y symbols among symbols of the UL signal and perform transmission of the UL signal during the remaining symbols, as in the above-described first UE operation method or the second UE operation method.

### 3.2.2. Second priority rule

The RS may be prioritized over the data channel. In other words, in the above-described various UE operation methods, the UE may preferentially perform transmission and reception of the RS over transmission and reception of the data channel.

As an example, if the last Y symbols of the DL signal are configured by the DL data channel and the UL RS is present in the first Y symbols of the UL signal, the UE may not receive the DL data channel signal during the Y symbols of the DL data channel as described in the third UE operation method. Alternatively, if the UL RS is present in an N-th symbol among the first Y symbols of the UL signal, the UE may be configured to receive the DL signal only in the remaining symbols except for the last Y-N+1 symbols among symbols corresponding to the DL signal and to transmit the UL signal in the remaining symbols except for N-1 symbols among symbols corresponding to the scheduled UL signal, as described in the fourth UL operation method.

### 3.2.3. Third priority rule

The control channel (or DL/UL data channel including DCI/UCI) may be prioritized priority over the RS. In other words, in the above-described various UE operation methods, the UE may preferentially perform transmission and reception of the control channel over transmission and reception of the RS.

As an example, if the last Y symbols of the DL signal are configured by the DL control channel and the UL RS is present in the first Y symbols of the UL signal, the UE may drop total transmission of the UL signal or may drop only transmission in the first Y symbols and transmit the UL signal in the remaining symbols, as described in the first or second UE operation method. In this case, if the UL RS is present in the UL channel in symbols including the Y symbols and an additional UL RS except for the UL RS in the Y symbols to be dropped by the UE is not present, the UE may be configured to drop total transmission of the UL channel as described in the first UE operation method. A UL signal transmission method of the UE according to whether an additional UL RS except for the UL RS in the Y symbols to be dropped is present is not limited to the above-described third UE operation method and may be extended to a general situation.

Alternatively, the RS may be prioritized over the control channel (or DL/UL data channel including DCI/UCI). In other words, in the above various UE operation methods, the UE may preferentially perform transmission and reception of the RS over transmission and reception of the control channel.

As an example, if the last Y symbols of the DL signal are configured by the DL control channel and the UL RS is present in the first Y symbols of the UL signal, the UE may not receive the DL control channel during the Y symbols among symbols corresponding to the DL control channel as described in the third UE operation method.

Alternatively, different priorities may be applied to the control channel and RS according to a control channel type or an information type carried (or transmitted through the control channel). For example, when HARQ-ACK is transmitted in the UL control channel (or UL data channel including UCI), the control channel may be prioritized over the RS. In contrast, if only CSI is transmitted in the UL control channel (or UL data channel including UCI) without HARQ-ACK, the RS may be prioritized over the control channel.

### 3.2.4. Fourth priority rule

If the last Y symbols of the DL signal are configured by the DL control channel (or DL data channel including DCI) and the first Y symbols of the UL signal are configured by the UL control channel (or UL data channel including UCI), the DL control channel (or the UL control channel) may be prioritized over other channels or RSs. In other words, in the above-described various UE operation methods, the UE may preferentially perform transmission and reception of the DL control channel (or UL control channel) over transmission of other channels or RSs.

Characteristically, different priorities may be applied to the control channel according to a control channel type or an information type included in the control channel. For example, when HARQ-ACK is transmitted in the UL control channel (or UL data channel including UCI), the control channel may be prioritized over the DL control channel. As another example, when only CSI is transmitted in the UL control channel (or UL data channel including UCI) without HARQ-ACK, the DL control channel may be prioritized over the UL control channel.

### 3.2.5. Fifth priority rule

The control channel (or DL/UL data channel including DCI/UCI) may be prioritized over the RS. In other words, in the above-described various UE operation methods, the UE may preferentially perform transmission and reception of the control channel over transmission and reception of the RS.

If the last Y symbols of the DL signal are configured by the DL data channel and the first Y symbols of the UL signal are configured by the UL data channel, a signal having a large (or small) ratio of Y symbols to a total data region out of the two signals (DL signal and UL signal) may be prioritized over the other signal. In other words, in the above-described various UE operation methods, the UE may preferentially perform transmission and reception of the DL signal or the UL signal according to whether the above-described condition is satisfied.

As an example, the ratio of Y symbols in the DL data channel is 50% and the ratio of Y symbols in the UL data channel is 70%, the UE may preferentially perform transmission of the UL data channel and may be configured to receive the DL data only in the remaining symbols except for the last Y symbols among symbols corresponding to the DL data as in the above-described third UE operation method.

### 3.3. Signaling method

As proposed in Section 3.1, if the UE does not perform partial transmission and reception of the DL and/or UL signal, the UE may inform the eNB (or gNB) of such information. Then the UE may prevent an issue caused by TA mismatch with the eNB (or gNB) from occurring.

Therefore, in this section, a detailed method in which the UE signals to the eNB (or gNB) that the UE has not performed partial transmission and reception of the DL and/or UL signal will be described.

3.3.1. First signaling method

When the UE totally or partially drops transmission of the UL signal as in the above-described first, second, and fourth UE operation methods, the UE may signal whether the UE drops transmission of the UL signal through a specific RS (e.g., a DM-RS or an SRS) of a corresponding slot.

As an example, when SRS transmission is scheduled in a slot in which UL signal transmission is dropped, the UE may signal whether the UE drops UL signal transmission by using the same resource as a scheduled SRS or a different resource (predefined time and/or frequency resource) from the scheduled SRS or by transmitting the same or different sequence (predefined sequence).

Alternatively, the UE may signal whether the UE drops UL signal transmission by transmitting a DM-RS (or an SRS) in a specific region among the remaining region except for the Y symbols among symbols in which UL signal transmission is dropped.

For example, when a DM-RS to be transmitted in an (Y+K)-th symbol among symbols in the UL data channels is present, the UE may drop total transmission of the UL data channel but may signal that transmission of the UL data channel is dropped due to TA mismatch by transmitting only the DM-RS in the (Y+K)-th symbol. In this case, detailed DM-RS sequence information (or used resource time and/or frequency region information) may be predefined or may be configured through higher layer signaling (e.g., RRC signaling) or L1 signaling (e.g., DCI).

When taking into account an operation in an unlicensed band, transmission of the DM-RS of the UE may be permitted only when it is determined that a channel immediately before the (Y+K)-th symbol is idle (for example, when it is determined that the channel is idle during a predetermined time (e.g., 25 $\mu$sec)).

3.3.2. Second signaling method

For mismatch handling described above, the eNB (or gNB) may preconfigure a periodic (or UE-dedicated) signal/channel and inform the UE of corresponding configuration information. Next, when a problem caused by TA mismatch occurs, the UE may inform the eNB (or gNB) of TA mismatch and an operation method of the UE caused by TA mismatch, using the nearest resource among preconfigured resources.

As an example, the eNB (or gNB) may preconfigure an SRS, a DM-RS, a UL control resource, and/or a PRACH, for TA mismatch handling. If a problem caused by TA mismatch occurs in timing slot#n and the nearest resource among preconfigured resources is present at timing slot#n+2, the UE may signal that TA mismatch has occurred (or which of the above-described first to fourth UE operation methods has been performed) through the corresponding resource.

3.3.3. Third signaling method

Information indicating thatTA mismatch has occurred (or information indicating which of the first to fourth UE operation methods has been performed, or a TA value or a difference between the TA and a GP value (or a maximum TA)) may be configured by partial information of UCI.

As an example, the UE may be configured to signal whether TA mismatch has occurred, through a UL control channel or UCI transmitted by piggyback on a UL data channel, using 1-bit information per UCI on each carrier. In this case, the 1-bit information may be a newly added configuration other than bit information defined in a legacy wireless communication system or 1-bit information among bit information defined in the legacy wireless communication system.

### 3.3.4. Fourth signaling method

Information indicating whether TA mismatch has occurred (or information indicating which of the first to fourth UE operation methods has been performed, or a TA value or a difference between the TA and a GP value (or a maximum TA)) may be configured through a Media Access Control (MAC) Control element (CE).

As an example, when TA mismatch occurs, the UE may configure information indicating that TA mismatch has occurred (or information indicating which of the first to fourth UE operation methods has been performed, or a TA value or a difference between the TA and a GP value (or a maximum TA)) through the MAC CE together with a MAC header and transmit the configured information together with UL data.

If the UE attempts to perform UL signal transmission according to the above-described first to fourth signaling methods, a transmission timing of the UL signal may be determined by applying a TA value of the UE at a current timing, by applying a TA value corresponding to a GP (or a maximum TA) interval, by applying a maximum TA value smaller than a GP (or a maximum TA) which has been set in the past, by applying the latest TA value smaller than a GP (a maximum TA) among TA values which have been set in the past, or by applying a TA value which is predetermined or configured by higher layer signaling or L1 signaling.

Upon receiving a signal according to the above-described various signaling methods, the eNB (or gNB) transmits a TA command again to the UE so as to solve a TA mismatch problem.

FIG. 13 is a diagram illustrating a signal transmission and reception method between a UE and an base station, applicable to the present invention.

First a UE 1 receives DCI for scheduling UL signal transmission from an base station (S1310).

Next, the UE 1 compares the length of a first time duration (the length between a reception timing of the DCI and a transmission timing of a UL signal scheduled by the DCI) with the length of a second time duration (the length determined based on a TA configured for the UE and a processing time of the UE for the DCI) (S1320).

The UE 1 performs an operation according to a result of comparison in S1320 (S1330). Herein, a detailed operation of the UE 1 in each situation and each condition may be as follows.

When the length of the first time duration is longer (or larger) than the length of the second time duration, the UE performs the UL signal transmission at the transmission timing of the UL signal scheduled by the DCI.

In other words, the UE 1 may perform the scheduled UL signal transmission starting from a timing configured by the base station 100.

As another example, when the length of the first time duration is shorter (or smaller) than the length of the second time duration, the UE may not perform the UL signal transmission scheduled by the DCI.

The UE may transmit an RS in a time duration in which the UL signal is scheduled to indicate that the UL signal is not transmitted. The RS may correspond to a DM-RS or an SRS.

As another example, when the length of the first time duration is shorter than the length of the second time duration, the UE transmits only a first UL signal out of the UL signal scheduled by the DCI. Herein, the first UL signal is scheduled after the second time duration from a timing at which the DCI is received.

In this case, a second UL signal scheduled before the second time duration from the timing at which the DCI is received out of the UL signal scheduled by the DCI may be punctured or rate-matched.

As another example, when the length of the first time duration is shorter than the length of the second time duration, the UE may transmit, to the base station, information indicating that the length of the first time duration is shorter than the length of the second time duration

In the above description, the length of the second time duration may be configured as one value among the TA configured for the UE, a sum of the TA and the processing time (e.g., DL-to-UL switching) of the UE, and a maximum value of the TA and the processing time of the UE.

Since each of the embodiments of the above-described proposed methods may be considered as one method for implementing the present invention, it is apparent that each embodiment can be regarded as a proposed method. In addition, the present invention can be implemented not only using the proposed methods independently but also by combining (or merging) some of the proposed methods. Moreover, a rule may be defined such that the BS should inform the UE of information on whether the proposed methods are applied (or information on rules related to the proposed methods) through a predefined signal (e.g., physical layer signal, higher layer signal, etc.).

### 4. <u>Device configuration</u>

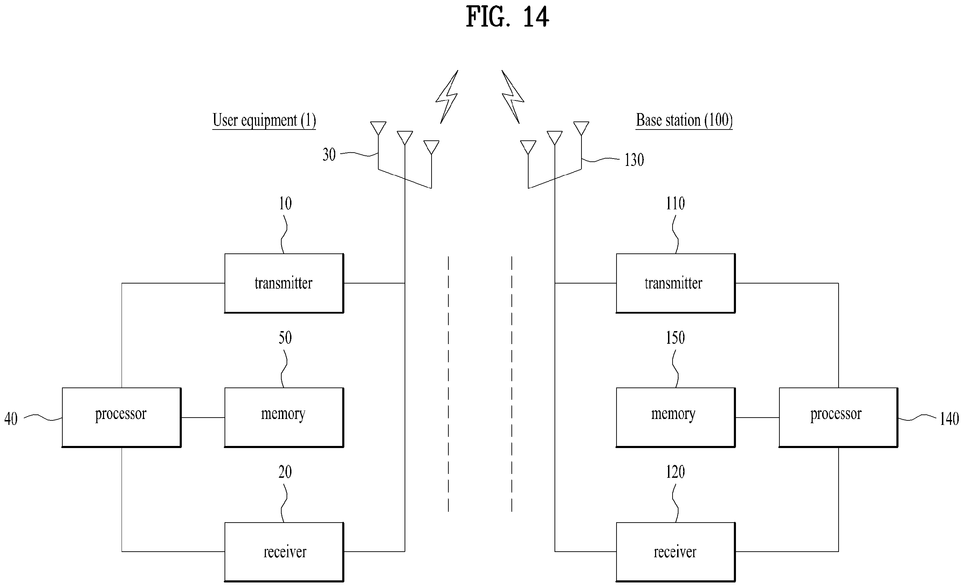

FIG. 14 is a diagram illustrating configurations of a UE and a BS capable of being implemented by the embodiments proposed in the present invention. The UE and BS illustrated in FIG. 14 operate to implement the above-described embodiments of the method for transmitting and receiving signals therebetween.

The UE 1 may act as a transmission end on UL and as a reception end on DL. The BS (eNB or gNB) 100 may act as a reception end on UL and as a transmission end on DL.

That is, each of the UE and the BS may include a Transmitter (Tx) 10 or 110 and a Receiver (Rx) 20 or 120, for controlling transmission and reception of information, data, and/or messages, and an antenna 30 or 130 for transmitting and receiving information, data, and/or messages.

Each of the UE and the base station may further include a processor 40 or 140 for implementing the afore-described embodiments of the present disclosure and a memory 50 or 150 for temporarily or permanently storing operations of the processor 40 or 140.

The UE 1 configured as described above receives DCI for scheduling UL signal transmission from the BS through the receiver 20. Next, the UE 1 performs the scheduled UL signal transmission, through the transmitter 10 and the processor 40, based on a result of comparison between a first time duration between a reception timing of the DCI and a transmission timing of a UL signal scheduled by the DCI and a second time duration determined based on a TA configured for the UE and a processing time of the UE for the DCI.

The Tx and Rx of the UE and the base station may perform a packet modulation/demodulation function for data transmission, a high-speed packet channel coding function, OFDM packet scheduling, TDD packet scheduling, and/or channelization. Each of the UE and the base station of FIG. 14 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present disclosure may be achieved by various means, for example, hardware, firmware, software, or a combination thereof.

In a hardware configuration, the methods according to exemplary embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present disclosure may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment of the present disclosure or included as a new claim by a subsequent amendment after the application is filed.

**Industrial Applicability**

The present disclosure is applicable to various wireless access systems including a 3GPP system, and/or a 3GPP2 system. Besides these wireless access systems, the embodiments of the present disclosure are applicable to all technical fields in which the wireless access systems find their applications. Moreover, the proposed method can also be applied to mmWave communication using an ultra-high frequency band.

**Claims**

1. A method of transmitting and receiving a signal by a User Equipment (UE) to and from a Base Station (BS) in a wireless communication system, the method comprising:

receiving from the BS, Downlink Control Information (DCI) for scheduling uplink signal transmission; and
performing the scheduled uplink signal transmission, based on a result of comparison between a first time duration between a reception timing of the DCI and a transmission timing of an uplink signal scheduled by the DCI and a second time duration determined based on a Timing Advance (TA) configured for the UE and a processing time of the UE for the DCI.

2. The method of claim 1,
wherein, when a length of the first time duration is larger than a length of the second time duration, the UE performs the uplink signal transmission at the transmission timing of the uplink signal scheduled by the DCI.

3. The method of claim 1,
wherein, when a length of the first time duration is smaller than a length of the second time duration, the UE does not perform the uplink signal transmission scheduled by the DCI.

4. The method of claim 3, further comprising
transmitting a reference signal in a time duration in which the uplink signal is scheduled, in order to indicate that the uplink signal is not transmitted.

5. The method of claim 4,
wherein the reference signal corresponds to a Demodulation Reference Signal (DM-RS) or a Sounding Reference Signal (SRS).

6. The method of claim 1,
wherein, when a length of the first time duration is smaller than a length of the second time duration, the UE transmits only a first uplink signal out of the uplink signal scheduled by the DCI, the first uplink signal being scheduled after the second time duration from a timing at which the DCI is received.

7. The method of claim 6,
wherein a second uplink signal scheduled before the second time duration from the timing at which the DCI is received out of the uplink signal scheduled by the DCI is punctured or rate-matched.

8. The method of claim 1, further comprising
transmitting, to the BS, information indicating that a length of the first time duration is smaller than a length of the second time duration, when the length of the first time duration is smaller than the length of the second time duration.

9. The method of claim 1,
wherein a length of the second time duration corresponds to one value among:

the TA configured for the UE,
a sum of the TA configured for the UE and the processing time of the UE, and
a maximum value of the TA configured for the UE and the processing time of the UE.

10. A User Equipment (UE) for transmitting and receiving a signal to and from a Base Station (BS) in a wireless communication system, the UE comprising:

a transmitter;
a receiver; and
a processor,
wherein the processor is configured to
receive Downlink Control Information (DCI) for scheduling uplink signal transmission from the BS; and
perform the scheduled uplink signal transmission based on a result of comparison between a first time duration between a reception timing of the DCI and a transmission timing of an uplink signal scheduled by the DCI and a second time duration determined based on a Timing Advance (TA) configured for the UE and a processing time of the UE for the DCI.

11. The UE of claim 10,

wherein, when a length of the first time duration is larger than a length of the second time duration, the processor is configured to perform the uplink signal transmission at the transmission timing of the uplink signal scheduled by the DCI.

12. The UE of claim 10,
wherein, when a length of the first time duration is smaller a the length of the second time duration, the processor is configured not to perform the uplink signal transmission scheduled by the DCI.

13. The UE of claim 12,
wherein the processor is configured to transmit a reference signal in a time duration in which the uplink signal is scheduled, in order to indicate that the uplink signal is not transmitted.

14. The UE of claim 13,
wherein the reference signal corresponds to a Demodulation Reference Signal (DM-RS).

15. The UE of claim 10,
wherein, when a length of the first time duration is smaller than a length of the second time duration, the processor is configured to transmit only a first uplink signal out of the uplink signal scheduled by the DCI, the first uplink signal being scheduled after the second time duration from a timing at which the DCI is received.

16. The UE of claim 15,
wherein a second uplink signal scheduled before the second time duration from the timing at which the DCI is received out of the uplink signal scheduled by the DCI is punctured or rate-matched.

17. The UE of claim 10,
wherein the processor is configured to transmit, to the BS, information indicating that a length of the first time duration is smaller than a length of the second time duration, when the length of the first time duration is shorter than the length of the second time duration.

18. The UE of claim 10,
wherein the length of the second time duration corresponds to one value among:

the TA configured for the UE,
a sum of the TA configured for the UE and the processing time of the UE, and
a maximum value of the TA configured for the UE and the processing time of the UE.

# FIG. 1

Initial cell search | System information reception | Random access procedure | General DL/UL Tx/Rx S18

P/S - SCH & [DLRS] & PBCH — S11

PDCCH/ PDSCH (BCCH) — S12

PRACH — S13 | PDCCH/ PDSCH — S14 | PUSCH — S15 | PDCCH/ PDSCH — S16

PDCCH/ PDSCH | PUSCH/ PUCCH — S17

- DL/UL ACK/NACK
- UE's CQI/PMI/rank reporting on PUSCH and PUCCH

EP 3 598 829 A1

# FIG. 2

Radio frame

| #0 | #1 | #2 | ... | #18 | #19 |

Slot

Subframe

(a)

One radio frame, $T_s = 307200T_s = 10ms$

One half frame, $T = 153600T_s = 5ms$

One slot $T_{slot} = 15360T_s$

$30720T_s$

| Subframe#0 | | | | Subframe#2 | Subframe#3 | Subframe#4 | Subframe#5 | | | | Subframe#7 | Subframe#8 | Subframe#9 |

One subframe, $30720T_s$

DwPTS    GP    UpPTS

DwPTS    GP    UpPTS

(b)

EP 3 598 829 A1

# FIG. 3

One DL slot

7 OFDM symbols

$N^{DL} \times 12$ subcarriers

12 subcarriers

Resource block
$12 \times 7$ resource elements

Resource element

# FIG. 4

# FIG. 5

Control region          Data region

First slot          Second slot

Frequency

One Subframe

Time

# FIG. 6

☐ DL only or UL only

▨ DL control channel

■ UL control channel

RB index

Frequency

Symbol index

1 TTI

# FIG. 7

# FIG. 8

# FIG. 9

# FIG. 10

# FIG. 11

t1                                          t4

| eNB | DL Tx |    | UL Rx |
|-----|-------|

| UE | DL Rx |    | UL Tx |

t2        t3

# FIG. 12

slot#n

| DL | GP | UL |

Ta    Tb

(a)

slot#n | slot#n+1

| DL | GP | UL |

Ta    Tb

(b)

# FIG. 13

UE (1)                                    BASE STATION (100)

Transmit DCI including UL grant (S310)

Compare length of first time duration
(length between reception timing of DCI
and transmission timing of scheduled UL signal)
with length of second time duration
(length based on TA
and processing time of UE) (S1320)

Perform operation according to result of comparison at S1320 (S1330)

# FIG. 14

## INTERNATIONAL SEARCH REPORT

International application No.

PCT/KR2018/002999

### A. CLASSIFICATION OF SUBJECT MATTER

*H04W 72/12(2009.01)i*

According to International Patent Classification (IPC) or to both national classification and IPC

### B. FIELDS SEARCHED

Minimum documentation searched (classification system followed by classification symbols)
H04W 72/12; H04W 56/00; H04W 72/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: downlink control information(DCI), reception time, TA(timing advance), process time of terminal, scheduling, and uplink

### C. DOCUMENTS CONSIDERED TO BE RELEVANT

| Category* | Citation of document, with indication, where appropriate, of the relevant passages | Relevant to claim No. |
|---|---|---|
| Y | WO 2017-035300 A1 (IDAC HOLDINGS, INC.) 02 March 2017<br>See paragraphs [0102]-[0124]; claims 1-20; and figure 5. | 1,2,9-11,18 |
| A | | 3-8,12-17 |
| Y | KR 10-1683413 B1 (LG ELECTRONICS INC.) 20 December 2016<br>See paragraphs [0028]-[0031], [0086]-[0092]; and claims 1-10. | 1,2,9-11,18 |
| A | KR 10-2013-0083445 A (NOKIA SIEMENS NETWORKS OY.) 22 July 2013<br>See paragraphs [0002]-[0007], [0058]-[0069]; and claims 1-14. | 1-18 |
| A | US 2014-0036859 A1 (EKPENYONG, Anthony et al.) 06 February 2014<br>See paragraphs [0014]-[0016]; and claims 1-21. | 1-18 |
| A | KR 10-2013-0045169 A (PANTECH INC.) 03 May 2013<br>See paragraphs [0120]-[0122]; and claims 1-18. | 1-18 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 JULY 2018 (12.07.2018) | **13 JULY 2018 (13.07.2018)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/002999**

| Patent document cited in search report | Publication date | Patent family member | Publication date |
|---|---|---|---|
| WO 2017-035300 A1 | 02/03/2017 | CN 107950065 A | 20/04/2018 |
| | | TW 201713068 A | 01/04/2017 |
| KR 10-1683413 B1 | 20/12/2016 | CN 105164950 A | 16/12/2015 |
| | | CN 105164950 B | 13/04/2018 |
| | | EP 2988438 A1 | 24/02/2016 |
| | | JP 2016-516370 A | 02/06/2016 |
| | | JP 2017-195644 A | 26/10/2017 |
| | | US 2016-0057752 A1 | 25/02/2016 |
| | | US 2017-0367093 A1 | 21/12/2017 |
| | | US 9769822 B2 | 19/09/2017 |
| | | WO 2014-163351 A1 | 09/10/2014 |
| KR 10-2013-0083445 A | 22/07/2013 | CN 103190186 A | 03/07/2013 |
| | | EP 2617244 A1 | 24/07/2013 |
| | | JP 2013-541279 A | 07/11/2013 |
| | | US 2013-0182691 A1 | 18/07/2013 |
| | | WO 2012-034584 A1 | 22/03/2012 |
| US 2014-0036859 A1 | 06/02/2014 | NONE | |
| KR 10-2013-0045169 A | 03/05/2013 | EP 2771992 A1 | 03/09/2014 |
| | | US 2013-0100938 A1 | 25/04/2013 |
| | | WO 2013-062279 A1 | 02/05/2013 |

Form PCT/ISA/210 (patent family annex) (January 2015)